# FASCICULE DE BREVET EUROPEEN

(11) **EP 2 199 638 B1**
(45) Date de publication et mention de la délivrance du brevet: **17.08.2011**
(21) Numéro de dépôt: 09177173.3
(22) Date de dépôt: 26.11.2009
(51) Int. Cl.: F16D 51/24, F16D 65/00

(54) **Frein à tambour**
Trommelbremse
Drum brake

(30) Priorité: 19.12.2008 FR 0807185
(43) Date de publication de la demande: 23.06.2010
(73) Titulaire: Robert Bosch GmbH, 70442 Stuttgart (DE)
(72) Inventeur: Dupas, Christophe, 91120 Palaiseau (FR); Moirand, Bernard, 93600 Aulnay sous Bois (FR); La, Laurent, 95400, Villiers le Bel (FR)
(74) Mandataire: Hurwic, Aleksander Wiktor

(56) Documents cités:
- EP-A- 0 811 781
- EP-A- 1 688 636
- GB-A- 2 346 421
- US-A- 1 910 590
- US-B1- 6 286 639

## Description

La présente invention se rapporte à un frein à tambour du genre de ceux qui comportent un plateau sur lequel est monté au moins un patin muni d'une garniture de friction et d'une âme qui permet d'appliquer l'ensemble patin-garniture contre un tambour de roue en réponse à une commande de freinage.

Les freins à tambour présentent plusieurs avantages notamment une simplicité d'installation de la fonction frein à main. Aussi, les freins à tambour sont toujours fréquemment utilisés notamment sur les roues arrière des véhicules.

Dans l'état de la technique (voir par example GB-A-2 346 421), le frein à tambour comporte, de préférence, deux patins opposés suivant une direction diamétrale du tambour. Le tambour coiffe le plateau. A ce titre, le plus souvent, le plateau lui-même est de forme circulaire. Les deux patins sont montés coulissant suivant une rotation entre deux parois de guidage.

Une âme pour chaque patin permet d'appliquer le patin contre le tambour de roue. Un piston du cylindre de roue exerce un effort sur l'âme. en réponse à une commande de freinage. La surface plane de cette âme est dans un plan parallèle à celui du plateau.

La commande de freinage est généralement transmise par un cylindre hydraulique de roue au sein duquel un piston action une âme. L'âme se comporte comme un levier prenant pivot sur un plot du plateau. Ce plot est réalisé sous la forme d'un relief transversal au plan du plateau.

De plus, deux extrémités du patin sont recourbées vers le centre du plateau. Ces extrémités servent alors de butées propres à s'appuyer dans le sens circonférentiel contre une paroi de guidage correspondante du plateau. Les parois de guidage sont également formées par un relief du plateau. Ainsi chaque relief, transversal au plan du plateau, possède une paroi sur laquelle vient buter le bord extérieur d'une extrémité recourbée du patin.

L'autre extrémité de l'âme formant levier est soumise à un effort de poussée exercé par un piston du cylindre hydraulique. Cet effort de poussée s'opère dans un sens propre à appliquer le patin contre le tambour. L'âme vient alors en appui par son bord extérieur contre la face interne du patin correspondant.

Ainsi, plus généralement, lors d'une action de freinage, le frein à tambour et notamment son plateau subissent plusieurs efforts. Premièrement, on constate un effort d'entrée au niveau du contact entre le piston du cylindre hydraulique et la première extrémité de l'âme.

Deuxièmement un effort d'application est présent au contact du patin et de sa garniture de friction avec le tambour. Troisièmement un effort de freinage s'exerce, en poussée, au point de contact du patin avec une butée du plateau correspondant à la paroi de guidage. Quatrièmement un effort de réaction s'exerce au point de contact de la seconde extrémité de l'âme avec le plot.

Le problème réside dans la ou les déformations que subit le plateau lorsque les différentes pièces précédemment décrites exercent leurs efforts notamment sur les différents reliefs.

Le plateau nécessite, à la base, une surface plane correspondant à une base de fixation du plateau sur la fusée de roue. Cette surface comporte aussi des reliefs notamment correspondant aux butées d'arrêt des patins en compression, aux plots de pivot et d'appui des âmes sur le plateau, ainsi qu'accessoirement à un support d'un câble de traction d'un frein à main. On entend ici par frein à main une commande du frein de garage exercée par une main ou, pour certains véhicules, au pied.

Les efforts subis par le plateau lors d'un freinage impliquent des vibrations qui engendrent des bruits plus ou moins important perturbant l'environnement acoustique du conducteur.

Une solution connue consiste à nervurer le plateau de façon à pouvoir le rigidifier et ainsi diminuer les vibrations. Mais elle ne donne pas pleinement satisfaction. Les nervures compliquent le motif du plateau et la structure des pièces d'emboutissage permettant de les obtenir.

Une autre solution connue consiste à apporter un amortissement artificiel de ces vibrations en ajoutant de petites masses ou des vis de précontraintes à des endroits bien précis du plateau. Ces endroits sont définis de façon à neutraliser des modes propres aux fréquences pour lesquelles des vibrations et leurs bruits associés sont détectés. Selon la forme du plateau on utilise alors l'un ou l'autre moyen.

Le problème est que l'emploi des masselottes est couteux, les métaux à forte densité tel le plomb devenant coûteux et encombrant vis-à-vis de l'espace disponible sur le plateau. De plus le métal employé, à base de plomb, est aujourd'hui proscrit sur les véhicules.

Les déformations minimales sont localisées à des endroits appelés noeuds du plateau, les déformations maximales sont localisées à des endroits appelés ventres du plateau. Les vis de précontraintes apportent alors un amortissement par contact mais ne peuvent pas toujours être positionnées à l'endroit où elles devraient se trouver selon la forme préétablie donnée au plateau. Il est donc judicieux de pouvoir placer une vis de contrainte à un endroit disponible tout en faisant en sorte que son action se porte pourtant sur un point où elle s'avère nécessaire, point où la vis ne peut prendre physiquement place.

De plus, un même frein, au départ silencieux seul sous une contrainte de freinage ou en association sur un type de véhicule peut respectivement devenir bruyant une fois monté dans un véhicule ou dans un autre type de véhicule.

Aussi, l'invention doit permettre de supprimer les bruits parasites lors d'un freinage ce, après l'emboutissage du plateau, au moment où le frein à tambour muni de son plateau est testé sur un type de véhicule.

A cet effet, l'invention propose d'employer une lame de précontrainte ajoutée. De préférence, cette lame de précontrainte est placée à la périphérie du plateau et possède à des points bien précis des ancrages et vis de précontrainte. Cette lame permet un montage propre à s'encastrer sur un noeud et comporte une vis sur un ventre ou inversement.

Les avantages de l'invention sont multiples : pouvoir être montée sur un plateau équipant un véhicule, ne pas nécessiter une modification du dessin du plateau et donc de ses outils d'emboutissage, de générer un coût de modification faible, de ne pas nécessiter de volume important sur le plateau, de s'affranchir de l'utilisation de masselottes et enfin de pouvoir placer des vis de précontrainte aux endroits du plateau accessibles c'est-à-dire sans gêner le positionnement ou l'action d'autres pièces du frein ce, tout en déportant l'action de la vis et de la lame en un point désigné comme source de déformations et donc source de bruits.

L'invention a donc pour objet un frein à tambour composé :
- d'un plateau,
- d'un tambour coiffant le plateau,
- le plateau comportant des reliefs et recevant sur une face coiffée par le tambour :
- un cylindre de piston,
- un patin et une garniture,
- une âme prenant appui sur le patin
caractérisé en ce que le plateau comporte une lame de précontrainte qui comporte un encastrement dans le plateau et comporte une vis de mise en précontrainte.

L'invention sera mieux comprise à la lecture de la description qui suit et à l'examen des figures qui l'accompagnent. Celles-ci ne sont présentées qu'à titre indicatif et nullement limitatif de l'invention.

Les figures montrent :
Figure 1 : une représentation d'un plateau équipé de patins et de garnitures,
Figures 2 : une représentation du plateau avec une lame de précontrainte selon l'invention,
Figure 3 : une figure illustrant les vibrations locales subis par le plateau,
Figure 4 : une représentation du profil du plateau équipé d'une lame de précontrainte,
Figure 5 : une représentation du plateau avec deux lames de précontrainte,

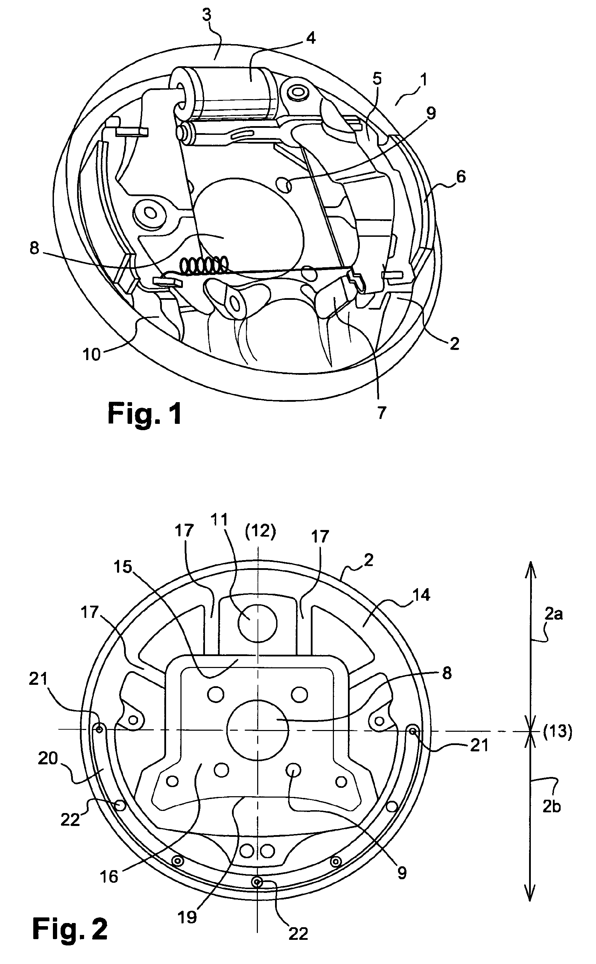

La figure 1 montre un frein à tambour 1 par sa face recevant un tambour ici non représenté et équipé des différentes pièces en mouvement. Le frein à tambour 1 comporte un plateau 2 à la périphérie duquel se trouve un bord 3. A l'intérieur du périmètre défini par ce bord 3 prend place le tambour. Contre le plateau 2 prend place un cylindre de roue 4 à l'intérieur duquel se trouvent des pistons actionnant respectivement de part et d'autre une âme 5 contre un patin 6. L'âme 5 se présente comme une pièce plate en forme de croissant de lune.

A cet effet, l'âme 5 prend pivot sur un appui de la forme d'un relief représenté par un plot 7. Les patins 6 prennent alors appui sur un bord intérieur périphérique situé sensiblement à la base du tambour. Au centre du plateau, une découpe 8 circulaire permet au plateau d'être fixé sur un porte fusée du véhicule. A cet effet, des percements 9 recevront des écrous de fixation. En plus du relief correspondant au plot 7, le plateau 2 comporte également des reliefs 10 permettant de créer des parois de guidage du patin 6 contre le tambour. Ces reliefs respectivement 7 et 10 sont sortants, c'est-à-dire orientés du plateau vers le tambour.

Sur la figure 2 est représenté le plateau 2 sur une face opposée à celle recevant le tambour. On y retrouve la découpe 8 permettant une fixation sur le porte fusée ainsi que les percements 9. Une lumière 11 circulaire correspond, dans la partie supérieure de ce plateau, à l'emplacement du cylindre de roue 4.

Ainsi un axe vertical 12 passe par le centre de la découpe 8 centre du plateau et le centre de la lumière 11. Un axe horizontal 13 perpendiculaire à l'axe horizontal 12 et globalement parallèle au plan horizontal du véhicule permet alors de définir une première moitié supérieure 2a du plateau 2 comportant la lumière 11 du cylindre de roue et une seconde partie inférieure 2b du plateau située au-dessous de cet axe 13.

Sur la face opposée au tambour, le plateau 2 comporte tout le long de sa périphérie un relief 14 orienté du plan du plateau vers le porte fusée et d'une largeur 15. Ce relief permet de rigidifier le bord externe du plateau 2. Le plateau 2 comporte également autour de la découpe 8 un relief 16 orienté du plan du plateau vers le porte fusée permettant dans la partie creuse correspondante et située sur la face opposée d'y placer les différentes pièces en mouvement décrites précédemment. Entre ce dernier relief 16 et le relief périphérique 14 du plateau, des nervures 17, également fabriqués par un emboutissage créant un relief de la base du plateau vers le porte fusée, relient ces deux reliefs afin d'encore améliorer la rigidité du plateau 2.

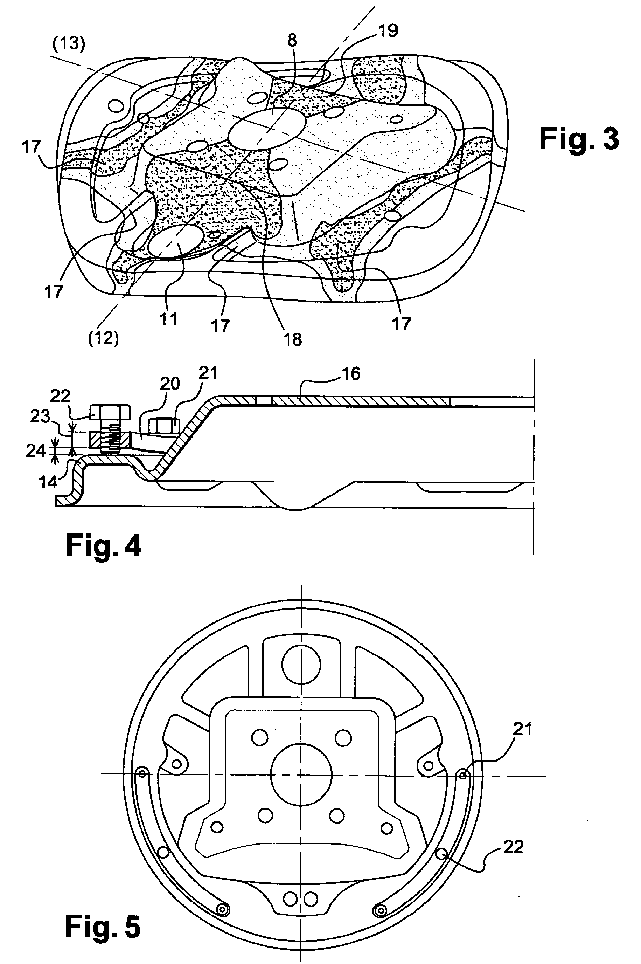

Sur la figure 3 est représentée une image de la face du plateau de la figure 2 correspondant à une analyse vibratoire. Cette image correspond à une recherche des déformées modales obtenues à partir d'une fréquence d'excitation du plateau 2. Cette méthode interférométrique permet ainsi une détermination rapide des modes propres du plateau 2 permettant de localiser les zones maximales et minimales de déformation sources respectivement des émissions maximales et minimales de bruit. On constate sur cette image des déformations subies par le plateau 2. Les déformations sont localisées principalement à la périphérie du plateau. Les zones sombres illustrent des déformations minimales dites noeuds de déformation et les zones claires des zones de déformation maximales dites ventres de déformation.

Les zones de teintes intermédiaires correspondent à des déformations d'intensité intermédiaires. Les zones noires correspondent donc aux endroits où le plateau 2 subit des déformations minimales et où sa rigidité est donc la plus importante. Un premier noeud est placé globalement entre la lumière 11 et la découpe 8 ainsi qu'entre deux nervures 17 parallèles à l'axe 12 vertical tout en étant centrée sur une arête 18 supérieure du relief 16. Cette arête 18 supérieure du relief 16 est placée dans la moitié supérieure du plateau 2, est parallèle à l'axe 13 et passe par un point situé entre le centre de la lumière 11 et le centre de la découpe 8 du plateau. C'est à l'endroit de la découpe 8 en effet que le plateau est solidement fixé au porte fusée et c'est à cet endroit que le relief 16 comporte cette arête parallèle à l'axe.

De la même façon, un autre noeud de vibration du plateau apparaît dans la partie inférieure du plateau, au-dessous de l'axe 13, entre le centre de la lumière 8 et un point, situé sur l'axe 12 et situé à la périphérie de la partie inférieure 2b du plateau. Cette rigidité correspond une nouvelle fois à la fixation du plateau au porte fusée et le centre de cette zone correspond à une seconde arête 19 sensiblement horizontale du relief 16 placée une nouvelle fois entre le centre du plateau et le point, placé sur l'axe 12, à la périphérie de sa partie inférieure 2b. Cette seconde arête 19 horizontale est symétrique de la première arête 18 horizontale par rapport au centre du plateau ainsi qu'à l'axe 13.

Sur l'image de la figure 3, on découvre également deux zones de rigidité maximales localisées de part et d'autre de l'axe vertical 12 et sensiblement parallèles à ce même axe 12. Chacune des deux zones de part et d'autre de l'axe 12 correspond également à une rigidité apportée par le relief 16.

Une de ces deux zones débute à partir d'une nervure 17, la nervure est située globalement à l'intersection de l'arête 18, parallèle à l'axe 13, avec une arête du relief 16 reliant l'arête 19 placée dans la partie inférieure 2b. Cette arête de liaison entre l'arête 18 et l'arête 19 s'évase en direction du bord du plateau afin d'atteindre les deux extrémités de l'arête 19 d'une longueur plus importante que l'arête 18. C'est aux deux intersections des arêtes de liaison avec l'arête 19 que relief 16 se trouve bord à bord avec le relief 14 à la périphérie de la partie inférieure 2b du plateau 2. Le relief 16 comportant une symétrie vis-à-vis de l'axe 12 offre symétriquement à cet axe une seconde zone de noeud de déformation similaire à la zone précédemment décrite. C'est principalement entre ces deux zones de rigidité symétriques à l'axe 12 et le bord du plateau que l'on trouve les zones dites ventres de déformation. Les ventres sont également localisés entre la zone de rigidité située dans la partie inférieure 2b du plateau 2 de la figure 2. Ils correspondent à l'arête 19 du relief 16 et les deux zones de déformation symétriques à l'axe 12 précédemment décrites.

Ainsi après localisation des ventres et des noeuds de déformation et en revenant à la figure 2, une lame de précontrainte 20 est fixée à la périphérie de la partie 2b du plateau de la figure 2. La lame 20 y est fixée de l'autre coté de la lumière 11 par rapport à la découpe 8.

Cette lame de contrainte 20 est apposée contre le relief 14 et possède une largeur sensiblement égale à la largeur 15 du relief 14. Cette lame de contrainte a ainsi pour but de réduire les déformations situées sur les ventres principalement entre deux noeuds du plateau. La lame 20 présente un plan qui est alors présenté face au plan du plateau et plus précisément parallèle à un plan sommital du relief 14.

Selon une variante préférée de la figure 2, cette lame de contrainte est unique et est placée en forme de demi-couronne, voire de portion de couronne, à la périphérie de la partie inférieure 2b du plateau 2. Afin d'être retenue au plateau 2, elle dispose d'encastrements 21 dans le relief 14 du plateau. Ces encastrements 21 peuvent prendre la forme d'un rivetage ou encore d'un collage métal contre le plateau 2, voire d'un sertissage, ou plus simplement d'une soudure. L'une ou l'autre de ces méthodes est sélectionnée en fonction de sa facilité d'exécution de pose ou encore en fonction de la résistance qu'on souhaite donner à la lame de contrainte pour contrer les efforts de déformation.

Un encastrement d'une part et une vis d'autre part correspondant à une ou plusieurs lames 20 de précontrainte sont respectivement symétriquement placés de part et d'autre d'un axe vertical 12 passant par un centre d'une lumière 11 du plateau 2 en regard du cylindre de roue et par le centre du plateau.

Entre deux encastrements 21, des vis de précontraintes 22 sont prévues afin de contrer les efforts de déformation.

Selon l'emplacement des encastrements 21 et des vis 22, l'invention offre deux possibilités.

Une première possibilité préférée consiste à placer les encastrements 21 aux noeuds du plateau. Dans ce cas, les vis 22 sont localisées entre deux encastrements de telle sorte à prendre appui sur un ventre du plateau où la déformation est la plus importante. La vis 22 est alors introduite dans la lame 20 de précontrainte à partir de la face opposée à celle prenant place contre le plateau. A cet effet, un taraudage à l'intérieure de la lame 20 est prévu en correspondance avec le diamètre de la dite vis 22. La longueur de la vis 22 est alors supérieure à l'épaisseur de la lame 20 afin qu'elle puisse traverser toute l'épaisseur de la lame puis prendre appui sur la surface du plateau 2. Ainsi selon la surface de déformation que l'on souhaite contrer, on peut utiliser différents paramètres que sont le diamètre de la vis, le nombre de vis prenant appui sur cette partie de la déformation mais aussi modifier la résistance ou la rigidité de la lame de précontrainte 20 employée.

Une seconde variante est possible et consiste à placer à l'inverse, les encastrements 21 sur des ventres de vibration et les vis 22 sur des noeuds de vibration. De plus, le plateau du frein à tambour offrant une sensible symétrie de conception, les vis 22 ainsi que les encastrements 21 se trouvent sur la lame de précontrainte 20 à la périphérie de la partie inférieure du plateau et ce, de préférence, de façon symétrique l'une de l'autre, vis-à-vis de l'axe vertical 12.

Ainsi sur la figure 2, on trouve au deux extrémités de la lame 20 deux encastrements 21 situés de part et d'autre de l'axe de symétrie 12, sur l'axe horizontal 13 à la périphérie du plateau 2. A un point placé à la périphérie de la partie inférieure 2b et situé sur l'axe 12, est fixée, sur la lame 20 de précontrainte, une vis 22 de précontrainte. A partir de cette vis de précontrainte et dans chaque quart de la moitié inférieure 2b, on alterne un encastrement 21 puis une vis de précontrainte 22 ce, jusqu'à retrouver les encastrements 21 placé sur l'axe 13. De préférence, toutes les distances angulaires, prise à partir du centre du plateau, entre vis 22 et encastrement 21 sont identiques. De la sorte, le positionnement des encastrements 21 et des vis 22 présente une symétrie par rapport à l'axe 12.

Pour la variante préférée de l'invention correspondant à la figure 2, le secteur angulaire entre chaque élément du type vis ou encastrement est de 30°. La lame 20 de précontrainte comporte ainsi respectivement quatre encastrements 21 et trois vis 22 de précontrainte dont l'une sur l'axe 12.

On peut prévoir, en d'autres variantes de l'invention, qu'entre deux encastrements 21, au moins deux vis 22 de précontraintes soient placées de façon à permettre notamment un vissage moins long de la vis de précontrainte et d'écarter de façon moins importante la surface de la lame 20 orientée face au plateau 2 de la surface du plateau grâce à une répartition d'un contre effort sur au moins deux vis 22 de contrainte.

Sur la figure 4 est représentée une coupe transversale du plateau. On y distingue ainsi en coupe le relief 16 correspondant sensiblement à la partie centrale du plateau 2 ainsi que le relief 14 à la périphérie du plateau 2 sur laquelle repose la lame de précontrainte 20. La lame comporte une épaisseur 23 taraudé aux dimensions de la vis 22. La longueur 24 de vissage de la vis 22 de précontrainte correspond à la distance séparant la face de la lame 20 face au relief 14. Selon la précontrainte que l'on souhaite exercer sur un ventre et/ou sur un noeud du plateau 2, on donne un nombre plus ou moins important de tours de vis 22 correspondant à une augmentation ou une diminution de cette longueur 24.

A titre indicatif, les vis 22 utilisées sont des vis de diamètre 6 mm possédant une longueur d'environ 1,8 cm et, à partir du contact correspondant à une longueur 24 nulle, chaque tour de vis ayant pour effet une augmentation de un millimètre de cette longueur 24 engendre une force de précontrainte orientée de la lame 20 vers le plateau 2 d'environ 29,870 Deca newton.

Sur la figure 5, une autre variante de l'invention permet de fixer deux lames de précontrainte 20 à la périphérie de la partie inférieure du plateau 2. De façon simplifiée, cette variante scinde la lame de précontrainte 20 décrite précédemment en deux lames 20 distinctes de telle sorte que le segment compris entre les deux encastrements 22 situés dans la partie inférieure du plateau, et de part et d'autre de la vis de précontrainte 21 placée dans la partie basse de cette même partie inférieure, n'existe pas. De la sorte, il apparaît deux lames 20 chacune comportant respectivement deux encastrements 21 et une vis 22 de précontrainte positionnés tels que décrit précédemment à la figure 2. De la même façon, les secteurs angulaires entre un encastrement 21 et une vis 22 restent identique à 30 °.

Cette dernière variante provient d'une constatation qu'à la figure 3, au point situé sur l'axe 12 et à la périphérie de la partie inférieure 2b du plateau 2, apparaît une zone correspondant à un noeud de vibration donc à une déformation quasi nulle du plateau. On peut ainsi traiter les deux zones de part et d'autre de ce noeud, correspondant à des ventres de vibration, où se situent respectivement deux encastrements 21 de chacune de deux lames 20 du plateau 2, grâce à deux vis 22 engagées dans les lames 20. Les vis 22 sont alors respectivement placées sur un noeud de vibration. Ainsi l'effort de précontrainte engendré par chacune des deux vis 22 est porté aux deux extrémités de chacune des deux lames 20 aux endroits même où sont placés les encastrements 21.

## Revendications

1. Frein à tambour 1 composé des éléments suivants :
- un plateau (2),
- un tambour coiffant le plateau (2),
le plateau comportant des reliefs (14,16) et recevant sur une face coiffée par le tambour :
- un cylindre de roue (4),
- un patin et une garniture,
- une âme (5) prenant appui sur le patin (6),
le plateau (2) comportant une lame (20) de précontrainte, ladite lame étant placée à la périphérie du plateau et fixée sur une face du plateau opposée à celle recevant le tambour,
**caractérisé que** la lame de précontrainte comporte un encastrement (21) dans le plateau et comporte une vis (22) de mise en précontrainte.

2. Frein à tambour selon la revendication 1, **caractérisé en ce qu'**un encastrement d'une part et une vis d'autre part correspondant à une ou plusieurs lames (20) de précontrainte sont respectivement symétriquement placés de part et d'autre d'un axe vertical (12) passant par un centre d'une lumière (11) du plateau (2) en regard du cylindre de roue et par le centre du plateau.

3. Frein à tambour selon l'une des revendications 1 à 2, **caractérisé en ce qu'**un encastrement (21) de la lame de précontrainte est réalisé, de part et d'autre du centre du plateau (2) et le long d'un axe horizontal (13) passant par le centre du plateau et perpendiculaire à un axe (12) passant par le centre d'une lumière (11) du cylindre de roue et par le centre du plateau.

4. Frein à tambour selon l'une des revendications 1 à 3, **caractérisé en ce que** des encastrements (21) et des vis (22) sont placés le long d'une lame (20) et à la périphérie d'une moitié inférieure (2b) du plateau tout en étant séparé, d'un point à un autre et à partir du centre du plateau, d'une même distance angulaire.

5. Frein à tambour selon l'une des revendications 1 à 4, **caractérisé en ce qu'**un encastrement est réalisé sous la forme d'un rivetage ou d'un collage ou d'un soudage ou d'un sertissage.

6. Frein à tambour selon l'une des revendications 1 à 5, **caractérisé en ce qu'**une vis (22) prend place sur une lame (20) centrée entre deux encastrements (21).

7. Frein à tambour selon l'une des revendications 1 à 6, **caractérisé en ce que** la lame de précontrainte comporte un encastrement sur un ventre de vibration du plateau et une vis sur un noeud de vibration du plateau.

8. Frein à tambour selon l'une des revendications 1 à 7, **caractérisé en ce que** la lame de précontrainte comporte un encastrement (21) sur un noeud de vibration du plateau et une vis (22) sur un ventre de vibration du plateau.

9. Frein à tambour selon l'une des revendications 1 à 8, **caractérisé en ce qu'**un plan formé par une lame de précontrainte et un plan du plateau sont parallèles.

10. Frein à tambour selon l'une des revendications 1 à 9, **caractérisé en ce que** le plateau (2) comporte plusieurs lames (20) de précontrainte.

11. Frein à tambour selon l'une des revendications 1 à 10, **caractérisé en ce qu'**une lame (20) de précontrainte est placée dans une moitié inférieure (2b) du plateau de telle sorte qu'une lumière (11) du plateau correspondant au passage du cylindre de roue soit centrée au sommet d'une moitié supérieure (2a) du plateau selon un axe vertical (12) passant par le centre du plateau et le centre de la lumière (11).

12. Frein à tambour selon l'une des revendications 1 à 11, **caractérisé en ce que** la lame de précontrainte possède la forme d'une demi-couronne fixée à la périphérie d'une moitié inférieure (2b) du plateau.

13. Frein à tambour selon l'une des revendications 1 à 12, **caractérisé en ce qu'**une lame de précontrainte est fixée sur un relief (14) en saillie du plateau (2), une largeur de la lame de précontrainte correspondant sensiblement à une largeur (15) du relief (14).

## Claims

1. Drum brake 1 made up of the following elements:
- a backplate (2),
- a drum sitting over the backplate (2),
the backplate having reliefs (14, 16) and accepting, on a face over which the drum sits:
- a wheel cylinder (4),
- a shoe and a lining,
- a web (5) resting against the shoe (6),
the backplate (2) comprising a preloading leaf (20), the said leaf being positioned at the periphery of the backplate and fixed to a face of the backplate that is the opposite face to the one that accepts the drum,
**characterized in that** the preloading leaf has an insetting (21) in the backplate and comprises a preloading screw (22).

2. Drum brake according to Claim 1, **characterized in that** an insetting on the one hand, and a screw on the other hand, corresponding to one or several preloading leaves (20) are respectively symmetrically positioned on each side of a vertical axis (12) that passes through a centre of a slot (11) in the backplate (2) facing the wheel cylinder and through the centre of the backplate.

3. Drum brake according to one of Claims 1 and 2, **characterized in that** an insetting (21) of the preloading leaf is performed on each side of the centre of the backplate (2) and along a horizontal axis (13) that passes through the centre of the backplate and is perpendicular to an axis (12) that passes through the centre of a slot (11) of the wheel cylinder and through the centre of the backplate.

4. Drum brake according to one of Claims 1 to 3, **characterized in that** the insettings (21) and the screws (22) are positioned along a leaf (20) and at the periphery of a lower half (2b) of the backplate, while being separated, from one point to another and from the centre of the backplate, by the same single angular distance.

5. Drum brake according to one of Claims 1 to 4, **characterized in that** an insetting is achieved in the form of a riveting or of a bonding or of a welding or of a crimping.

6. Drum brake according to one of Claims 1 to 5, **characterized in that** a screw (22) rests against a leaf (20) centred between two insettings (21).

7. Drum brake according to one of Claims 1 to 6, **characterized in that** the preloading leaf has an insetting at a backplate vibration antinode and a screw at a backplate vibration node.

8. Drum brake according to one of Claims 1 to 7, **characterized in that** the preloading leaf comprises an insetting (21) on a backplate vibration node and a screw (22) on a backplate vibration antinode.

9. Drum brake according to one of Claims 1 to 8, **characterized in that** a plane formed by a preloading leaf and a plane of the backplate are parallel.

10. Drum brake according to one of Claims 1 to 9, **characterized in that** the backplate (2) comprises several preloading leaves (20).

11. Drum brake according to one of Claims 1 to 10, **characterized in that** a preloading leaf (20) is positioned in a lower half (2b) of the backplate in such a way that a slot (11) in the backplate corresponding to the passage of the wheel cylinder is centred at the top of an upper half (2a) of the backplate along a vertical axis (12) passing through the centre of the backplate and the centre of the slot (11).

12. Drum brake according to one of Claims 1 to 11, **characterized in that** the preloading leaf is in the shape of a half-annulus fixed to the periphery of a lower half (2b) of the backplate.

13. Drum brake according to one of Claims 1 to 12, **characterized in that** a preloading leaf if fixed to a relief (14) projecting from the backplate (2), a width of the preloading leaf corresponding substantially to a width (15) of the relief (14).

## Patentansprüche

1. Trommelbremse (1), die aus den folgenden Elementen zusammengesetzt ist:
- einer Platte (2),
- einer die Platte (2) überdeckende Trommel, wobei die Platte Reliefs (14, 16) aufweist und auf einer von der Trommel überdeckten Seite aufnimmt:
- einen Bremszylinder (4),
- einem Bremsklotz und einen Bremsbelag,
- einem Bremssteg (5), der auf dem Bremsklotz (6) aufliegt,
wobei die Platte (2) ein Vorspannplättchen (20) aufweist, wobei das Plättchen am Umfang der Platte angeordnet und an einer Seite der Platte entgegengesetzt zu derjenigen befestigt ist, die die Trommel aufnimmt,
**dadurch gekennzeichnet, dass** das vorspannplättchen eine Einbaueinrichtung (21) in die Platte und eine Vorspannschraube (22) aufweist.

2. Trommelbremse nach Anspruch 1, **dadurch gekennzeichnet, dass** eine Einbaueinrichtung einerseits und eine Schraube andererseits, die einem oder mehreren Vorspannplättchen (20) entsprechen, symmetrisch zu beiden Seiten einer senkrechten Achse (12) angeordnet sind, die durch eine Mitte eines Langlochs (11) der Platte (2) gegenüber dem Bremszylinder und durch die Mitte der Platte geht.

3. Trommelbremse nach einem der Ansprüche 1 bis 2, **dadurch gekennzeichnet, dass** eine Einbaueinrichtung (21) des Vorspannplättchens zu beiden Seiten der Mitte der Platte (2) und entlang einer durch die Mitte der Platte gehenden waagrechten Achse (13), die lotrecht zu einer durch die Mitte eines Langlochs (11) des Bremszylinders und durch die Mitte der Platte gehenden Achse (12) ist, hergestellt wird.

4. Trommelbremse nach einem der Ansprüche 1 bis 3, **dadurch gekennzeichnet, dass** Einbaueinrichtungen (21) und Schrauben (22) entlang eines Plättchens (20) und am Umfang einer unteren Hälfte (2b) der Platte angeordnet und dabei von einem Punkt zu einem anderen und ausgehend von der Mitte der Platte den gleichen Winkelabstand zueinander haben.

5. Trommelbremse nach einem der Ansprüche 1 bis 4, **dadurch gekennzeichnet, dass** ein Einbau in Form einer vernietung oder einer Verklebung oder eines Verschweißens oder einer Verpressung durchgeführt wird.

6. Trommelbremse nach einem der Ansprüche 1 bis 5, **dadurch gekennzeichnet, dass** eine Schraube (22) zwischen zwei Einbaueinrichtungen (21) zentriert auf einem Plättchen (20) angeordnet ist.

7. Trommelbremse nach einem der Ansprüche 1 bis 6, **dadurch gekennzeichnet, dass** das Vorspannplättchen eine Einbaueinrichtung auf einem Schwingungsbauch der Platte und eine Schraube auf einem Schwingungsknoten der Platte aufweist.

8. Trommelbremse nach einem der Ansprüche 1 bis 7, **dadurch gekennzeichnet, dass** das Vorspannplättchen eine Einbaueinrichtung (21) auf einem Schwingungsknoten der Platte und eine Schraube (22) auf einem Schwingungsbauch der Platte aufweist.

9. Trommelbremse nach einem der Ansprüche 1 bis 8, **dadurch gekennzeichnet, dass** eine von einem Vorspannplättchen geformte Ebene und eine Ebene der Platte parallel sind.

10. Trommelbremse nach einem der Ansprüche 1 bis 9, **dadurch gekennzeichnet, dass** die Platte (2) mehrere Vorspannplättchen (20) aufweist.

11. Trommelbremse nach einem der Ansprüche 1 bis 10, **dadurch gekennzeichnet, dass** ein Vorspannplättchen (20) in einer unteren Hälfte (2b) der Platte derart angeordnet ist, dass ein dem Durchgang des Bremszylinders entsprechendes Langloch (11) der Platte am Scheitel einer oberen Hälfte (2a) der Platte gemäß einer senkrechten Achse (12) zentriert ist, die durch die Mitte der Platte und die Mitte des Langlochs (11) geht.

12. Trommelbremse nach einem der Ansprüche 1 bis 11, **dadurch gekennzeichnet, dass** das Vorspannplättchen die Form eines Halbkranzes besitzt, der am Umfang einer unteren Hälfte (2b) der Platte befestigt ist.

13. Trommelbremse nach einem der Ansprüche 1 bis 12, **dadurch gekennzeichnet, dass** ein Vorspannplättchen an einem vorstehenden Relief (14) der Platte (2) befestigt ist, wobei eine Breite des Vorspannplättchens im Wesentlichen einer Breite (15) des Reliefs (14) entspricht.
